# EUROPEAN PATENT APPLICATION

(11) **EP 4 851 243 A1**
(43) Date of publication of application: **09.12.2026**
(21) Application number: 25749059.9
(22) Date of filing: 31.01.2025
(51) Int. Cl.: C08L 23/00, C08L 53/02

(54) **THERMOPLASTIC ELASTOMER COMPOSITION FOR AUTOMOTIVE INTERIOR MEMBER AND MOLDED ARTICLE THEREOF**

(30) Priority: 01.02.2024 JP 2024014060
(71) Applicant: Mitsubishi Chemical Corporation, Tokyo 100-8251 (JP)
(72) Inventor: OZAMA, Yoko, Tokyo 100-8251 (JP); KINOSHITA, Yuma, Tokyo 100-8251 (JP)
(74) Representative: Vossius & Partner Patentanwälte Rechtsanwälte mbB
(86) International application number: PCT/JP2025/003235
(87) International publication number: WO 2025/164773

(57) **Abstract**

The present invention provides a thermoplastic elastomer composition having both excellent fluidity and chemical resistance for use in forming an automotive interior member. The thermoplastic elastomer composition for an automotive interior member of the present invention contains: Component (A): a polyolefin; Component (B): a hydrogenated product of a block copolymer having a block containing an aromatic vinyl compound unit and a conjugated diene compound unit, the hydrogenated product having a melt flow rate of 5 to 40 g/10 min as measured at 190°C with a load of 2.16 kg in accordance with JIS K 7210-1 (2014 edition); Component (C): a block copolymer having at least one block mainly composed of a conjugated diene compound unit and at least one block mainly composed of an aromatic vinyl compound unit, the block copolymer being other than Component (B), and/or a hydrogenated product thereof; and component (D): a hydrocarbon-based softening agent for rubber.

## Description

### Technical Field

The present invention relates to a thermoplastic elastomer composition for an automotive interior member and a molded article thereof.

### Background Art

Thermoplastic elastomers are materials that are softened and have fluidity when heated, and have rubber elasticity when cooled. Specifically, the thermoplastic elastomers are melted at a processing temperature in a molding process and are easily moldable in the same manner as well-known thermoplastic resins. However, the thermoplastic elastomers have the same physical properties as those of crosslinked rubbers at a temperature at which the thermoplastic elastomers are actually used as various materials after the molding process. Thus, the thermoplastic elastomers have the same moldability as the thermoplastic resins, while having flexibility and unique rubber elasticity. The thermoplastic elastomers also can be recycled. Thus, the thermoplastic elastomers are widely used in applications such as automotive parts including automotive interior skins, building parts, medical parts, wire coating materials, and miscellaneous goods.

In the production of automotive parts, styrene-based thermoplastic elastomers, which are excellent in, for example, weather resistance, heat resistance and impact resistance, are used as the thermoplastic elastomers, and development has been carried out in response to various demands from the market. For example, Patent Literature 1 proposes a hydrogenated block copolymer composition containing from 1 mass% or more and 95 mass% or less of a hydrogenated block copolymer containing a specific vinyl aromatic compound monomer unit and a conjugated diene monomer unit and from 5 mass% or more and 99 mass% or less of at least one type of an olefin-based resin.

### Citation List

### Patent Literature

Patent Literature 1: JP 2021-017562 A

### Summary of Invention

### Technical Problem

In recent years, there has been an increasing trend of a demand for high-quality feel and comfort as a living space in an automotive interior space. In such a trend, automotive interior members, particularly automotive interior skins represented by those for use in, for example, armrests and console pads, have been made thinner due to the increased demand for ease of molding and reduction in the weight of parts.

In a case where a thermoplastic elastomer composition is molded, the composition is heated and melted to yield fluidity, and the molten composition having the fluidity is poured into a mold and molded. However, if the fluidity of the molten composition is insufficient, an incomplete filling into the mold occurs. In thin-wall molding, the molten composition filled in a cavity of the mold starts to solidify from the moment of contact with the mold, and becomes less likely to flow into the cavity. Therefore, it is necessary to improve the fluidity of the thermoplastic elastomer composition in order to prevent incomplete filling.

In addition, when a molded article of the thermoplastic elastomer composition comes into contact with another resin molded article, a plasticizer and the like contained in the another resin molded article may migrate to the molded article. For example, some protective cases for smartphones are formed from a resin composition containing vinyl chloride. When such protective cases are in contact with the top of an armrest or a console pad for a long time, a plasticizer contained in the resin composition containing vinyl chloride may migrate to an interior skin formed by the thermoplastic elastomer composition. When the interior skin is made thin, the interior skin is more likely to be affected by the migration of the plasticizer due to the thinness, and a problem such as deformation is likely to occur.

Accordingly, an objective of the present invention is to provide a thermoplastic elastomer composition having both excellent fluidity and chemical resistance, for use in forming an automotive interior member.

### Solution to Problem

As a result of intensive studies to solve the above problems, the present inventors have found that a thermoplastic elastomer composition containing: a polyolefin; a hydrogenated product of a block copolymer having a block containing an aromatic vinyl compound unit and a conjugated diene compound unit, the hydrogenated product having a melt flow rate of 5 to 40 g/10 min; a block copolymer that is other than the hydrogenated product of the block copolymer, and that has at least one block mainly composed of a conjugated diene compound unit and at least one block mainly composed of an aromatic vinyl compound unit, and/or a hydrogenated product thereof; and a hydrocarbon-based softening agent for rubber, can achieve both excellent fluidity and chemical resistance, and thus accomplished the present invention.

An aspect 1 of the present invention is a thermoplastic elastomer composition for an automotive interior member, the thermoplastic elastomer composition containing Component (A), Component (B), Component (C), and Component (D):
Component (A): a polyolefin;
Component (B): a hydrogenated product of a block copolymer having a block containing an aromatic vinyl compound unit and a conjugated diene compound unit, the hydrogenated product having a melt flow rate of 5 g/10 min or more and 40 g/10 min or less as measured at 190°C with a load of 2.16 kgf in accordance with JIS K 7210-1 (2014 edition);
Component (C): a block copolymer having at least one block mainly composed of a conjugated diene compound unit and at least one block mainly composed of an aromatic vinyl compound unit, the block copolymer being other than Component (B), and/or a hydrogenated product thereof; and
Component (D): a hydrocarbon-based softening agent for rubber.

An aspect 2 of the present invention is the thermoplastic elastomer composition for an automotive interior member according to the aspect 1, wherein Component (C) has a weight-average molecular weight of 100000 or more and 1000000 or less.

An aspect 3 of the present invention is the thermoplastic elastomer composition for an automotive interior member according to the aspect 1 or 2, wherein a content of Component (B) is from 5 to 70 parts by mass with respect to 100 parts by mass of a total of Component (A), Component (B), Component (C), and Component (D).

An aspect 4 of the present invention is the thermoplastic elastomer composition for an automotive interior member according to any one of the aspects 1 to 3, wherein a content of Component (C) is from 1 to 50 parts by mass with respect to 100 parts by mass of a total of Component (A), Component (B), Component (C), and Component (D).

An aspect 5 of the present invention is the thermoplastic elastomer composition for an automotive interior member according to any one of the aspects 1 to 4, wherein a content of Component (A) is from 3 to 49 parts by mass with respect to 100 parts by mass of a total of Component (A), Component (B), Component (C), and Component (D).

An aspect 6 of the present invention is the thermoplastic elastomer composition for an automotive interior member according to any one of the aspects 1 to 5, wherein a content of Component (D) is from 15 to 50 parts by mass with respect to 100 parts by mass of a total of Component (A), Component (B), Component (C), and Component (D).

An aspect 7 of the present invention is the thermoplastic elastomer composition for an automotive interior member according to any one of the aspects 1 to 6, wherein the content of Component (B) is from 5 to 70 parts by mass and the content of Component (C) is from 1 to 50 parts by mass, with respect to 100 parts by mass of a total of Component (A), Component (B), Component (C), and Component (D).

An aspect 8 of the present invention is the thermoplastic elastomer composition for an automotive interior member according to any one of the aspects 1 to 7, wherein Component (B)/Component (C) is from 5 to 95/from 95 to 5 (mass ratio), when a total of Component (B) and Component (C) is taken as 100 parts by mass.

An aspect 9 of the present invention is the thermoplastic elastomer composition for an automotive interior member according to any one of the aspects 1 to 8, wherein Component (C)/Component (D) is from 20 to 80/from 80 to 20 (mass ratio), when a total of Component (C) and Component (D) is taken as 100 parts by mass.

An aspect 10 of the present invention is the thermoplastic elastomer composition for an automotive interior member according to any one of the aspects 1 to 9, wherein Component (B) has a polymer block mainly composed of an aromatic vinyl compound unit without containing a conjugated diene compound unit, in addition to the block containing the aromatic vinyl compound unit and the conjugated diene compound unit.

An aspect 11 of the present invention is the thermoplastic elastomer composition for an automotive interior member according to any one of the aspects 1 to 10, the thermoplastic elastomer composition containing polypropylene as Component (A).

An aspect 12 of the present invention is the thermoplastic elastomer composition for an automotive interior member according to any one of the aspects 1 to 11, the thermoplastic elastomer composition containing an ethylene/α-olefin copolymer as Component (A).

An aspect 13 of the present invention is the thermoplastic elastomer composition for an automotive interior member according to any one of the aspects 1 to 12, the thermoplastic elastomer composition containing Component (E), wherein a content of Component (E) is from 0.01 to 10 parts by mass with respect to 100 parts by mass of a total of Component (A), Component (B), Component (C), and Component (D):
Component (E): a crosslinking agent.

An aspect 14 of the present invention is the thermoplastic elastomer composition for an automotive interior member according to the aspect 13, the thermoplastic elastomer composition containing Component (F), wherein a content of Component (F) is from 0.05 to 3 parts by mass with respect to 100 parts by mass of the total of Component (A), Component (B), Component (C), and Component (D):
Component (F): a crosslinking aid.

An aspect 15 of the present invention is the thermoplastic elastomer composition for an automotive interior member according to any one of the aspects 1 to 14, wherein the thermoplastic elastomer composition has a hardness of 30 or more and 95 or less as measured using a type A durometer in accordance with JIS K 6253 (2006 edition).

An aspect 16 of the present invention is the thermoplastic elastomer composition according to any one of the aspects 1 to 15, wherein the thermoplastic elastomer composition has a melt flow rate of 45 g/10 min or more and 200 g/10 min or less as measured in accordance with JIS K 7210-1.

An aspect 17 of the present invention is the thermoplastic elastomer composition for an automotive interior member according to any one of the aspects 1 to 16, wherein the thermoplastic elastomer composition has a hardness of 35 or more and 87 or less as measured by using a type A durometer in accordance with JIS K 6253 (2006 edition) and a melt flow rate of 45 g/10 min or more and 200 g/10 min or less as measured in accordance with JIS K 7210-1.

An aspect 18 of the present invention is an automotive interior member containing the thermoplastic elastomer composition for an automotive interior member described in any one of the aspects 1 to 17.

An aspect 19 of the present invention is an automotive interior skin containing the thermoplastic elastomer composition for an automotive interior member described in any one of the aspects 1 to 17.

### Advantageous Effects of Invention

The present invention can provide a thermoplastic elastomer composition having flexibility and having both excellent fluidity and chemical resistance. As a result, thin-wall molding can be easily carried out, and the thermoplastic elastomer composition is suitable for forming an automotive interior member. In addition, among automotive interior members, the thermoplastic elastomer composition is particularly suitable for an automotive interior skin.

### Description of Embodiments

Hereinafter, embodiments of the present invention will be described in detail. However, the present invention is not limited to the following description and can be carried out with optional modifications within a scope that does not depart from the gist of the present invention. In the present specification, when numerical values or physical property values are expressed with "to" between the values, it is to be understood that the values are included.

In the present specification, the term "mass" is synonymous with "weight".

### Thermoplastic Elastomer Composition for Automotive Interior Member

A thermoplastic elastomer composition for an automotive interior member according to the embodiment of the present invention (hereinafter, may be referred to as a "thermoplastic elastomer composition of the present embodiment") contains Component (A), Component (B), Component (C), and Component (D):
Component (A): a polyolefin;
Component (B): a hydrogenated product of a block copolymer having a block containing an aromatic vinyl compound unit and a conjugated diene compound unit, the hydrogenated product having a melt flow rate of 5 g/10 min or more and 40 g/10 min or less as measured at 190°C with a load of 2.16 kgf in accordance with JIS K 7210-1 (2014 edition);
Component (C): a block copolymer having at least one block mainly composed of a conjugated diene compound unit and at least one block mainly composed of an aromatic vinyl compound unit, the block copolymer being other than Component (B), and/or a hydrogenated product thereof; and
Component (D): a hydrocarbon-based softening agent for rubber.

Each component is described below.

In the present specification, the phrase "mainly composed of" means that the content rate of the target monomer unit among the monomer units forming the target polymer block is 50 mass% or more.

### Component (A)

The polyolefin of Component (A) is not limited as long as it is a polymer containing 50 mass% or more of an olefin unit. Examples thereof include polypropylene, polyethylene, an ethylene/α-olefin copolymer, poly-1-butene, and ethylene-based copolymers such as an ethylene/vinyl acetate copolymer, an ethylene/(meth)acrylic acid copolymer, and an ethylene/(meth)acrylate copolymer. Polypropylene is suitably used, because of its excellent heat resistance and moldability, for example. In addition, by using polypropylene and the ethylene/α-olefin copolymer in combination, flexibility can be further imparted.

The thermoplastic elastomer composition of the present embodiment may contain, as Component (A), only one type of polyolefin such as polypropylene, or may contain two or more types of polyolefins, the types, the content rates, the physical properties, and the like, of the monomer units contained in the polyolefins being different from each other.

Polypropylene is a polyolefin having a content rate of a propylene unit of 50 mass% or more with respect to all monomer units contained in the polyolefin.

As polypropylene, the type of polypropylene is not particularly limited, and any of a polypropylene homopolymer and propylene copolymers such as a propylene random copolymer and a propylene block copolymer can be used.

When polypropylene is the propylene random copolymer, examples of the monomer copolymerizing with propylene include ethylene, 1-butene, 2-methylpropylene, 1-pentene, 3-methyl-1-butene, 1-hexene, 4-methyl-1-pentene, and 1-octene. In addition, when polypropylene is the propylene block copolymer, examples thereof include a propylene block copolymer obtained by polymerization in multiple stages. More specifically, examples of the propylene block copolymer include a propylene block copolymer obtained by polymerizing propylene in the first stage and polymerizing propylene and ethylene in the second stage.

The content rate of the propylene unit in polypropylene is preferably 60 mass% or more, more preferably 75 mass% or more, and even more preferably 90 mass% or more. When the content rate of the propylene unit is equal to or more than the above lower limit, heat resistance and rigidity tend to be improved. Meanwhile, the upper limit of the content rate of the propylene unit in polypropylene is not particularly limited and is usually 100 mass%. The content rate of the propylene unit in polypropylene can be determined by infrared spectroscopy.

Examples of the method for producing polypropylene include a slurry method using an inert solvent, a solvolysis method, a gas phase method substantially free of solvent, and a bulk polymerization method using a polymerization monomer as a solvent, in the presence of a catalyst. For example, in the case of the slurry method, the reaction can be carried out in an inert hydrocarbon such as n-butane, isobutane, n-pentane, isopentane, hexane, heptane, octane, cyclohexane, benzene, toluene, and xylene, or in a liquid monomer. The polymerization temperature is usually from -80 to 150°C, and preferably from 40 to 120°C. The polymerization pressure is preferably from 1 to 60 atm. The molecular weight of the obtained polyolefin can be controlled with hydrogen or another known molecular weight control agent. The polymerization is carried out by a continuous or batch reaction, and the conditions thereof may be those usually employed. Furthermore, the polymerization reaction may be carried out in a single stage or in multiple stages.

Examples of the above catalyst used include a Ziegler catalyst and a metallocene catalyst. Among these catalysts, the metallocene catalyst is preferable.

Examples of the Ziegler catalyst include, but are not limited to, a two component-based catalyst of a transition metal component such as a titanium halide compound such as titanium trichloride, titanium tetrachloride, and trichloroethoxytitanium, and a contact product of the titanium halide compound and a magnesium compound represented by magnesium halide, and an organic metal component such as an alkylaluminum compound or a halide thereof, a hydride thereof, or an alkoxide thereof; and a three component-based catalyst with an electron-donating compound containing, for example, nitrogen, carbon, phosphorus, sulfur, oxygen, and silicon added to the components of the two component catalyst.

Examples of the metallocene catalyst include, but are not limited to, catalysts made of a compound of Group 4 transition metal of the periodic table containing a ligand having a cyclopentadienyl skeleton (so-called metallocene compound), a co-catalyst capable of reacting with the metallocene compound to activate the metallocene compound into a stable ionic state, and if necessary, an organoaluminum compound, and any known catalyst as the metallocene catalyst can be used. The metallocene compound is preferably a crosslinked metallocene compound capable of stereoregular polymerization of propylene, and more preferably a crosslinked metallocene compound capable of isotactic polymerization of propylene.

For polypropylene, a commercially available product may also be used. For example, commercially available polypropylene can be obtained from, for example, the following manufacturers and can be appropriately selected. Examples of the commercially available product of polypropylene include NOVATEC (trade name) PP of Japan Polypropylene Corporation; Prime Polypro (trade name) of Prime Polymer Co., Ltd.; Sumitomo Noblen (trade name) of SUMITOMO CHEMICAL COMPANY, LIMITED; polypropylene block copolymer of SunAllomer Ltd.; Moplen (trade name) of LyondellBasell Industries N.V.; ExxonMobil PP of Exxon Mobil Corporation; Formolene (trade name) of Formosa Plastics Corporation; Borealis PP of Borealis GmbH; SEETEC PP of LG Chem Ltd.; ASI POLYPROPYLENE of A. Schulman, Inc.; INEOS PP of INEOS Olefins & Polymers; Braskem PP of Braskem; Samsung Total of Samsung Total Petrochemicals Co., Ltd.; Sabic (trade name) PP of SABIC; TOTAL PETROCHEMICALS Polypropylene of Total Petrochemicals; and YUPLENE (trade name) of SK Geo Centric.

The ethylene/α-olefin copolymer, which is one of the components of the thermoplastic elastomer composition of the present invention, is preferably a copolymer containing an ethylene unit and an α-olefin unit having three to 20 carbons. The ethylene/α-olefin copolymer can be obtained by copolymerizing at least ethylene and an α-olefin having three to 20 carbons. Examples of the α-olefin having three to 20 carbons include propylene, 1-butene, 1-pentene, 1-hexene, 4-methyl-1-pentene, 1-heptene, 1-octene, 1-nonene, 1-decene, 1-undecene, and 1-dodecene. In particular, from the viewpoint of imparting mechanical strength and flexibility, an α-olefin having three to 12 carbons is preferable. Propylene, 1-butene, and 1-octene are more preferable. 1-octene is particularly preferable.

The content of the ethylene unit in the ethylene/α-olefin copolymer is preferably from 50 mass% or more and 80 mass% or less with respect to the total amount of the content of the ethylene unit and the content of the α-olefin unit. The content of the ethylene unit in the ethylene/α-olefin copolymer is preferably high from the viewpoint of mechanical strength, while the content of the ethylene unit in the ethylene/α-olefin copolymer is preferably small from the viewpoint of flexibility. The content of the ethylene unit in the ethylene/α-olefin copolymer is more preferably 55 mass% or more, even more preferably 60 mass% or more. Also, the content of the ethylene unit is more preferably 75 mass% or less. The content of the ethylene unit and the content of the α-olefin unit having three to 20 carbons in Component (A) can each be determined by infrared spectroscopy.

The ethylene/α-olefin copolymer may be copolymerized with a monomer having an unsaturated bond, if necessary. Preferred examples of the monomer having an unsaturated bond include conjugated diolefins such as butadiene and isoprene, non-conjugated diolefins such as 1,4-hexadiene; cyclic diene compounds such as dicyclopentadiene and norbornene derivatives; and acetylenes. In particular, from the viewpoint of imparting flexibility, ethylidene norbornene (ENB) and dicyclopentadiene (DCP) are more preferable.

The ethylene/α-olefin copolymer can be produced by using a known polymerization catalyst such as a Ziegler-Natta catalyst, a vanadium-based catalyst, or a metallocene catalyst. The polymerization method is not particularly limited and may be a liquid phase polymerization method such as a solution polymerization method, a suspension polymerization method, or a bulk polymerization method; a gas phase polymerization method; or another known polymerization method.

The ethylene/α-olefin copolymer may also be obtained as a commercially available product. Examples of the commercially available products include ENGAGE (trade name), INFUSE (trade name), and NORDEL (trade name) manufactured by Dow Inc.; Vistalon (trade name) manufactured by Exxon Mobil Corporation; EP rubber manufactured by ENEOS Materials Corporation; Keltan (trade name) and Keltan (trade name) ECO manufactured by ARLANXEO; KEP manufactured by Kumho Polychem Co. Ltd.; Esprene (trade name) manufactured by SUMITOMO CHEMICAL COMPANY, LIMITED; and Mitsui EPT (trade name), TAFMER (trade name) P and TAFMER (trade name) A manufactured by Mitsui Chemicals, Inc.

From the viewpoint of heat resistance, the polyolefin has a weight-average molecular weight (Mw) of preferably 50000 or more, more preferably 100000 or more, and even more preferably 200000 or more. Meanwhile, from the viewpoint of moldability, the polyolefin preferably has a weight-average molecular weight of 1000000 or less, more preferably 950000 or less, and even more preferably 900000 or less.

Here, the weight-average molecular weight (Mw) of the polyolefin is a weight-average molecular weight measured by a gel permeation chromatography (hereinafter, sometimes abbreviated as "GPC") method calibrated with polystyrene under the following conditions.

### Measurement Conditions

Equipment: HLC-8321 GPC/HT manufactured by Tosoh Corporation
Column: Three columns of TSKgel GMHHR-H (20) HT
Carrier: 1,2,4-trichlorobenzene
Measurement temperature: 140°C
Flow rate: 1.0 mL/min
Injection amount: 300 µL
Concentration: 1 mg/mL
Detector: Differential refraction
Molecular weight calibration standard: Standard polystyrene

The melt flow rate (MFR, measured at a temperature of 230°C with a load of 2.16 kgf) of the polyolefin is not particularly limited, but it is preferably from 0.05 to 2000 g/10 min. When the melt flow rate (MFR) is within the above range, the thermoplastic elastomer composition of the present embodiment has excellent moldability, and the appearance of an automotive interior member formed from the thermoplastic elastomer composition of the present embodiment is enhanced. In addition, the mechanical properties and the heat resistance can be controlled within desired ranges.

The melt flow rate (MFR) of the polyolefin is more preferably 0.1 g/10 min or more, even more preferably 1 g/10 min or more, more preferably 500 g/10 min or less, and even more preferably 200 g/10 min or less. The melt flow rate of the polyolefin is measured under the conditions of a measuring temperature of 230°C with a measuring load of 2.16 kgf in accordance with JIS K 7210-1 (2014 edition).

When the ethylene/α-olefin copolymer is used as the polyolefin, the ethylene/α-olefin copolymer preferably has a melt flow rate (MFR) of 0.1 to 20 g/10 min, and more preferably from 0.3 to 10 g/10 min. By setting the MFR within the above range, the thermoplastic elastomer composition has an improved balance between fluidity and mechanical strength. The melt flow rate (MFR) of the ethylene/α-olefin copolymer is measured under the conditions of a measuring temperature of 190°C with a measuring load of 2.16 kg in accordance with JIS K 7210-1.

The ethylene/α-olefin copolymer preferably has a density of 0.8 to 0.9 g/cm³.

### Component (B)

Component (B) is a hydrogenated product of a block copolymer having a block containing an aromatic vinyl compound unit and a conjugated diene compound unit (hereinafter, sometimes referred to as a "block P") (hereinafter, sometimes referred to as "first hydrogenated block copolymer"), and has a melt flow rate of 5 to 40 g/10 min as measured at 190°C with a load of 2.16 kgf in accordance with JIS K 7210-1 (2014 edition).

The hydrogenated product of the block copolymer having the block P (first hydrogenated block copolymer) is a block copolymer with a part or all of the conjugated diene compound unit in the block copolymer being hydrogenated by hydrogenating the block copolymer having the block P.

The first hydrogenated block copolymer of Component (B) can enhance the fluidity and the chemical resistance of the thermoplastic elastomer composition. Thus, thin-wall molding is easily carried out from the thermoplastic elastomer composition. Also, when a molded article of the thermoplastic elastomer composition and another resin molded article come into contact with each other and a liquid component such as a plasticizer contained in the another resin molded article migrates to the molded article, the absorption of the liquid component to the molded article can be suppressed.

An aromatic vinyl compound forming the aromatic vinyl compound unit is not particularly limited, and examples thereof include styrene, α-methylstyrene, p-methylstyrene, divinylbenzene, 1,1-diphenylethylene, N,N-dimethyl-p-aminoethylstyrene, and N,N-diethyl-p-aminoethylstyrene. In particular, styrene, α-methylstyrene, and p-methylstyrene are preferably used from the viewpoint of availability and productivity. Styrene is more preferable.

The aromatic vinyl compound unit contained in the block P may be only one type of aromatic vinyl compound unit or may contain two or more types of aromatic vinyl compound units.

A conjugated diene compound forming the conjugated diene compound unit is a diolefin having a pair of conjugated double bonds, and examples thereof include, but are not particularly limited to, 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene. In particular, 1,3-butadiene and isoprene are preferably used from the viewpoint of productivity. 1,3-butadiene is more preferable.

The conjugated diene compound unit contained in the block P may be only one type of conjugated diene compound unit or may contain two or more types of conjugated diene compound units.

The block P may contain a monomer unit other than the aromatic vinyl compound unit and the conjugated diene compound unit. Examples of a compound forming the monomer unit that may be contained in the block P include acrylic acid derivatives and methacrylic acid derivatives. From the viewpoint of flexibility, the block P is preferably composed of the aromatic vinyl compound unit and the conjugated diene compound unit.

The content of the aromatic vinyl compound unit in the block P is preferably 30 mass% or more, more preferably 45 mass% or more, and preferably 79 mass% or less, more preferably 70 mass% or less. That is, the content of the aromatic vinyl compound unit in the block P is preferably within the range of 30 to 79 mass%.

The content of the conjugated diene compound unit in the block P is preferably 21 mass% or more, more preferably 30 mass% or more, and preferably 70 mass% or less, more preferably 55 mass% or less. That is, the content of the conjugated diene compound unit in the block P is preferably within the range of 21 to 70 mass%.

The content ratio of the aromatic vinyl compound unit to the conjugated diene compound unit in the block P is preferably within the range of 1:0.21 to 1:2.3, more preferably 1:0.25 to 1:1.8, in terms of mass ratio.

The above polymer block is used for the block P. However, the block P in the block copolymer may be only one type, and in a case where a plurality of blocks P is present in the block copolymer, the compound units of the plurality of blocks P may be the same or different from each other.

The block copolymer having the block P contains the above block P, and a polymer block and a monomer unit other than the block P. In particular, the block copolymer preferably has the block P, and a polymer block other than the block P. The bonding pattern of each block unit and/or monomer unit is not particularly limited, and the block copolymer having the block P may be linear, branched, radial, or the like.

Examples of the polymer block other than the block P include a polymer block composed mainly of an aromatic vinyl compound unit without containing a conjugated diene compound unit (hereinafter, may be referred to as "block S").

Examples of an aromatic vinyl compound forming the aromatic vinyl compound unit contained in the block S include the above aromatic vinyl compounds, and preferred examples thereof are also the same. The aromatic vinyl compound unit contained in the block S may be only one type of aromatic vinyl compound unit or may contain two or more types of aromatic vinyl compound units.

The content of the aromatic vinyl compound unit in the block S is 50 mass% or more. From the viewpoint of thermal stability, the content thereof is more preferably 80 mass% or more, even more preferably 90 mass% or more, and most preferably 100 mass%. That is, the content of the aromatic vinyl compound unit in the block S is preferably within the range of 50 to 100 mass%.

Examples of a monomer unit other than the aromatic vinyl compound unit contained in the block S include monomer units derived from compounds such as acrylonitrile and methacrylate. The monomer unit other than the aromatic vinyl compound unit may be of only one type, or may contain two or more types thereof.

Examples of the monomer unit that may be contained in the block copolymer having the block P include a monomer unit derived from an aromatic vinyl compound.

The content of the block P in the first hydrogenated block copolymer is preferably within the range of 60 to 99 mass%. When the content of the block P is 60 mass% or more, the chemical resistance of the thermoplastic elastomer composition can be improved and the effect of the present invention is easily obtained. When the content of the block P is 99 mass% or less, both mechanical strength and flexibility are easily achieved while suppressing bleed-out.

The content of the block P in the first hydrogenated block copolymer is more preferably 70 mass% or more, even more preferably 80 mass% or more, and more preferably 97 mass% or less, even more preferably 95 mass% or less.

The first hydrogenated block copolymer as Component (B) is obtained by yielding a block copolymer having the block P and then hydrogenating the block copolymer.

Examples of the method for producing the first hydrogenated block copolymer include known polymerization methods. For example, a method such as batch polymerization or continuous polymerization can be used.

The degree of hydrogenation in the first hydrogenated block copolymer is preferably 20% or more from the viewpoint of light resistance and chemical resistance. The degree of hydrogenation is more preferably 50% or more, even more preferably 85% or more, and even more preferably 92% or more. Since a higher degree of hydrogenation is more preferable, the degree of hydrogenation has no upper limit and is 100% or less.

The first hydrogenated block copolymer has a melt flow rate (MFR, measured at 190°C with a load of 2.16 kgf) of 5 g/10 min or more and 40 g/10 min or less. When the melt flow rate (MFR) is 5 g/10 min or more, the fluidity of the thermoplastic elastomer composition of the present embodiment is improved, and thus thin-wall molding of a molded article is easily carried out. When the melt flow rate (MFR) is 40 g/10 min or less, flash formation is easily controlled when the thermoplastic elastomer composition of the present embodiment is molded.

The first hydrogenated block copolymer preferably has a melt flow rate of 7 g/10 min or more, more preferably 10 g/10 min or more, even more preferably 15 g/10 min or more, and preferably 35 g/10 min or less, more preferably 30 g/10 min or less, even more preferably 28 g/10 min or less.

The melt flow rate (MFR) of the first hydrogenated block copolymer is measured under the conditions of 190°C with a load of 2.16 kgf in accordance with JIS K 7210-1 (2014 edition).

Specific examples of the first hydrogenated block copolymer used in the present embodiment include a hydrogenated product of a styrene-butadiene-styrene block copolymer and a hydrogenated product of a styrene-isoprene-styrene block copolymer.

For the first hydrogenated block copolymer, a commercially available product may also be used. Examples of the commercially available first hydrogenated block copolymer include "S.O.E. (trade name)" manufactured by Asahi Kasei Corporation.

The thermoplastic elastomer composition of the present embodiment may contain one type of the first hydrogenated block copolymer alone or may contain two or more types thereof in combination.

### Component (C)

Component (C) is a block copolymer having at least one block mainly composed of a conjugated diene compound unit (hereinafter, sometimes referred to as "block Q") and at least one block mainly composed of an aromatic vinyl compound unit (hereinafter, sometimes referred to as "block R"), and/or a hydrogenated product thereof (hereinafter, sometimes referred to as "second (hydrogenated) block copolymer"), provided that Component (C) does not contain the first hydrogenated block copolymer that is Component (B).

Component (C) has a high affinity with a softening agent such as oil, and by incorporating Component (C) in the thermoplastic elastomer composition of the present embodiment, the flexibility of the thermoplastic elastomer composition can be enhanced.

Examples of a conjugated diene compound forming the block Q include the same conjugated diene compounds as those exemplified for Component (B), and examples thereof include 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene. In particular, 1,3-butadiene and isoprene are preferably used from the viewpoint of productivity. 1,3-butadiene is more preferable.

The block Q may be composed of one type of conjugated diene compound unit or may be composed of two or more types of conjugated diene compound units.

The block Q may contain a monomer unit other than the conjugated diene compound unit. Examples of the monomer unit other than the conjugated diene compound unit include monomer units derived from compounds such as butylene, isobutylene, and 1,4-hexadiene. The monomer unit other than the conjugated diene compound unit may be of only one type, or may contain two or more types thereof.

The content of the conjugated diene compound unit in the block Q is 50 mass% or more. From the viewpoint of flexibility, the content thereof is more preferably 80 mass% or more, even more preferably 90 mass% or more, and most preferably 100 mass%. That is, the content of the conjugated diene compound unit in the block Q is preferably within the range of 50 to 100 mass%.

Examples of an aromatic vinyl compound forming the block R include the same aromatic vinyl compounds as those exemplified for Component (B), and examples thereof include styrene, α-methylstyrene, p-methylstyrene, divinylbenzene, 1,1-diphenylethylene, N,N-dimethyl-p-aminoethylstyrene, and N,N-diethyl-p-aminoethylstyrene. In particular, styrene, α-methylstyrene, and p-methylstyrene are preferably used from the viewpoint of availability and productivity. Styrene is more preferable.

The block R may be composed of one type of aromatic vinyl compound unit or may be composed of two or more types of aromatic vinyl compound units.

In addition, the block R may contain a monomer unit other than the vinyl aromatic compound unit. Examples of the monomer unit other than the vinyl aromatic compound unit include monomer units derived from compounds such as acrylonitrile and methacrylate. The monomer unit other than the vinyl aromatic compound unit may be of only one type or may contain two or more types thereof.

The content of the vinyl aromatic compound unit in the block R is preferably 50 mass% or more. From the viewpoint of thermal stability, the content thereof is more preferably 80 mass% or more, even more preferably 90 mass% or more, and most preferably 100 mass% or more. That is, the content of the vinyl aromatic compound unit in the block R is preferably within the range of 50 to 100 mass%.

The block copolymer having at least one block Q and at least one block R may be linear, branched, and radial, for example. However, such a block copolymer is preferably a block copolymer represented by Formula (I) or (II):

(Q-R)ₙ (I);

or

R-(Q-R)ₙ (II).

(In Formulae (I) and (II), Q represents the block Q; R represents the block R; and n represents an integer of one to five.)

In Formulae (I) and (II), when a plurality of blocks Q and a plurality of blocks R is present, respectively, the compound units of the blocks Q or the blocks R may be the same or different.

From the viewpoint of the rubber elasticity of the composition, Component (C) used in the present embodiment is more preferably a block copolymer represented by Formula (II), even more preferably a block copolymer represented by Formula (II), wherein n is from one to three, particularly preferably a block copolymer represented by Formula (II), wherein n is one or two, and most preferably a block copolymer represented by Formula (II), wherein n is one.

Component (C) contained in the thermoplastic elastomer composition of the present embodiment may be a hydrogenated product of a block copolymer having at least one block Q and at least one block R. The hydrogenated product is preferably a hydrogenated product of a block copolymer represented by Formula (I) or Formula (II), more preferably a hydrogenated product of a block copolymer represented by Formula (II), even more preferably a hydrogenated product of a block copolymer represented by Formula (II), wherein n is from one to three, particularly preferably a hydrogenated product of a block copolymer represented by the formula (II), wherein n is one or two, and most preferably a hydrogenated product of a block copolymer represented by Formula (II), wherein n is one.

The content of the block Q in the second (hydrogenated) block copolymer as Component (C) is preferably within the range of 30 to 95 mass%. When the content of the block Q is 30 mass% or more, the flexibility of the composition can be improved while suppressing bleed-out. When the content of the block Q is 95 mass% or less, the mechanical strength is easily improved.

The content of the block Q in the second (hydrogenated) block copolymer is more preferably 40 mass% or more, even more preferably 50 mass% or more, and more preferably 90 mass% or less, even more preferably 85 mass% or less.

The proportion of the block R in the second (hydrogenated) block copolymer is preferably within the range of 5 to 70 mass%. When the content of the block R is 5 mass% or more, the mechanical strength can be improved. When the content of the block R is 70 mass% or less, it is easy to achieve the flexibility while suppressing bleed-out.

The content of the block R in the second (hydrogenated) block copolymer is more preferably 10 mass% or more, even more preferably 15 mass% or more, and more preferably 60 mass% or less, even more preferably 50 mass% or less.

When the aromatic vinyl compound forming the block R in the second (hydrogenated) block copolymer is a styrene unit, the content of the block R described above can be expressed as a content rate of the styrene unit.

Examples of the method for producing the second (hydrogenated) block copolymer include known polymerization methods. For example, a method such as batch polymerization or continuous polymerization can be used.

The second (hydrogenated) block copolymer as Component (C) preferably has a weight-average molecular weight (Mw) of 10000 or more and 1000000 or less. When the second (hydrogenated) block copolymer has Mw of 10000 or more, the heat resistance and the mechanical strength can be improved. When the second (hydrogenated) block copolymer has Mw of 1000000 or less, the fluidity of the thermoplastic elastomer composition of the present embodiment can be improved and the molded appearance can be improved.

The second (hydrogenated) block copolymer more preferably has a weight-average molecular weight (Mw) of 30000 or more, even more preferably 40000 or more, more preferably 800000 or less, and even more preferably 650000 or less.

The weight-average molecular weight (Mw) of the second (hydrogenated) block copolymer is a weight-average molecular weight measured by a GPC method calibrated with polystyrene under the following conditions.

### Measurement Conditions

Equipment: "150C ALC/GPC" manufactured by Nihon Millipore K.K.
Column: Three columns of "AD80M/S" manufactured by Showa Denko K.K.
Detector: Infrared spectrophotometer "MIRANIA" manufactured by the Foxboro Company.
Wavelength: 3.42 µm
Solvent: o-dichlorobenzene
Measurement temperature: 140°C
Flow rate: 1 cm³/min
Injection amount: 200 µL
Concentration: 2 mg/cm³
As an antioxidant, 0.2 mass% of 2,6-di-t-butyl-p-phenol was added.

Specific examples of the second (hydrogenated) block copolymer used in the present embodiment include a styrene-butadiene-styrene block copolymer and a hydrogenated product thereof, and a styrene-isoprene/butadiene-styrene block copolymer and a hydrogenated product thereof.

For the second (hydrogenated) block copolymer, a commercially available product may also be used. Examples of the commercially available second (hydrogenated) block copolymer include "Kraton (trade name) G" manufactured by Kraton Polymers; "SEPTON (trade name)" manufactured by Kuraray Co., Ltd.; "TUFTEC (trade name)" and "S.O.E. (trade name)" manufactured by Asahi Kasei Corporation; and "TAIPOL (trade name)" manufactured by TSRC Corporation.

The thermoplastic elastomer composition of the present embodiment may contain one type of the second (hydrogenated) block copolymer alone or may contain two or more types thereof in combination.

### Component (D)

A hydrocarbon-based softening agent for rubber of Component (D) is effective for improving the flexibility and the fluidity of the thermoplastic elastomer composition of the present embodiment.

The hydrocarbon-based softening agent for rubber is preferably a mineral oil-based softening agent or a synthetic resin-based softening agent, and more preferably a mineral oil-based softening agent, since the mineral oil-based softening agent and the synthetic resin-based softening agent have high affinity with Component (C).

The mineral oil-based softening agent is generally a mixture of an aromatic hydrocarbon, a naphthene-based hydrocarbon, and a paraffin-based hydrocarbon. A compound in which 50% or more of all carbon atoms are the carbons derived from the paraffin-based hydrocarbon is known as a paraffin-based oil; a compound in which about 30 to 45% of all carbon atoms are the carbons derived from the naphthene-based hydrocarbon is known as a naphthene-based oil; and a compound in which 35% or more of all carbon atoms are the carbons derived from the aromatic hydrocarbon is known as an aromatic oil. The hydrocarbon-based softening agent for rubber used as Component (D) may be any one of various softening agents mentioned above or a mixture of two or more thereof. However, among these, the paraffin-based oil is preferable because of its good hue. Examples of the synthetic resin-based softening agent include polybutene and low molecular weight polybutadiene.

From the viewpoint of improving the fluidity of the thermoplastic elastomer composition of the present embodiment, the hydrocarbon-based softening agent for rubber preferably has a low kinematic viscosity at 40°C (see JIS K 2283), while the hydrocarbon-based softening agent for rubber preferably has a high kinematic viscosity from the viewpoint of resistance to fogging, for example. Specifically, the kinematic viscosity is preferably 20 centistokes (cSt) or more, and more preferably 50 centistokes or more. Meanwhile, the kinematic viscosity is preferably 800 centistokes or less, and more preferably 600 centistokes or less.

The hydrocarbon-based softening agent for rubber may be a commercially available product. Examples of the commercially available products include "Nisseki Polybutene (trade name) HV" series manufactured by JX Nippon Oil & Energy Corporation and "Diana (trade name) Process Oil PW" series manufactured by Idemitsu Kosan Co., Ltd., and a suitable product may be appropriately selected from these products and used.

Only one type of the hydrocarbon-based softening agent for rubber of Component (D) may be used, or two or more types thereof may be used in any combination and proportions.

### Component (E)

By incorporating Component (E): a crosslinking agent, the thermoplastic elastomer composition of the present embodiment can be considered to be a crosslinked thermoplastic elastomer composition. Examples of Component (E) include an organic peroxide, a phenol resin, and a crosslinking agent other than the organic peroxide and the phenol resin.

Specific examples of the organic peroxide include dialkyl peroxides such as di-t-butyl peroxide, t-butylcumyl peroxide, dicumyl peroxide, 2,5-dimethyl-2,5-di(t-butylperoxy)hexane, 2,5-dimethyl-2,5-di(t-butylperoxy)hexyne-3,1,3-bis(t-butylperoxyisopropyl)benzene, and 1,1-di(t-butylperoxy)-3,3,5,-trimethylcyclohexane; peroxyesters such as t-butylperoxybenzoate, t-butylperoxy-2-ethylhexanoate, t-butylperoxyisopropyl carbonate, 2,5-dimethyl-2,5-di(benzoylperoxy)hexane, and 2,5-dimethyl-2,5-di(benzoylperoxy)hexyne-3; hydroperoxides such as acetyl peroxide, lauroyl peroxide, benzoyl peroxide, p-chlorobenzoyl peroxide, and 2,4-dichlorobenzoyl peroxide; diacyl peroxides such as di-3,5,5,-trimethylhexanoyl peroxide, octanoyl peroxide, and dibenzoyl peroxide; and ketone peroxides such as methyl ethyl ketone peroxide and cyclohexanone peroxide.

Specific examples of the phenol resin include non-halogenated phenol resins such as alkylphenol formaldehydes and halogenated phenol resins such as brominated alkylphenol formaldehydes.

### Component (F)

When the thermoplastic elastomer composition of the present embodiment contains Component (E): a crosslinking agent, the thermoplastic elastomer composition preferably contains Component (F): a crosslinking aid.

Examples of the crosslinking aid include crosslinking aids for organic peroxides, such as sulfur, p-quinone dioxime, p-dinitrosobenzene, and 1,3-diphenylguanidine; crosslinking aids for phenol resins, such as tin(II) chloride anhydrous, tin(II) chloride dihydrate, iron(III) chloride, chlorinated paraffin, chlorinated polyethylene, chlorosulfonated polyethylene, iron oxide, titanium oxide, magnesium oxide, silicon dioxide, and zinc oxide; polyfunctional vinyl compounds such as divinylbenzene, triallyl cyanurate, triallyl isocyanurate, and diallyl phthalate; and polyfunctional (meth)acrylate compounds such as ethylene glycol di(meth)acrylate, diethylene glycol di(meth)acrylate, polyethylene glycol di(meth)acrylate, trimethylolpropane tri(meth)acrylate, and allyl (meth)acrylate. In the present specification, "(meth)acrylate" is a generic term for acrylate and methacrylate.

### Blending ratio

Component (A) is in an amount of preferably 3 parts by mass or more, more preferably 5 parts by mass, even more preferably 10 parts by mass, and preferably 49 parts by mass or less, more preferably 45 parts by mass or less, even more preferably 40 parts by mass or less, with respect to 100 parts by mass of the total of Component (A) to Component (D) in the thermoplastic elastomer composition of the present embodiment. That is, the content of Component (A) is preferably within the range of 3 to 49 parts by mass with respect to 100 parts by mass of the total of Component (A) to Component (D). When the thermoplastic elastomer composition of the present embodiment contains the polyolefin of Component (A) within the above range, the effects of improving the heat resistance and the mechanical properties by Component (A) can be sufficiently obtained while the effect of blending other components is sufficiently obtained.

Component (B) is in an amount of preferably 5 parts by mass or more, more preferably 10 parts by mass or more, even more preferably 15 parts by mass or more, and preferably 70 parts by mass or less, more preferably 65 parts by mass or less, even more preferably 55 parts by mass or less, with respect to 100 parts by mass of the total of Component (A) to Component (D). That is, the content of Component (B) is preferably within the range of 5 to 70 parts by mass with respect to 100 parts by mass of the total of Component (A) to Component (D). By incorporating the hydrogenated block copolymer of Component (B) within the above range, the effects of improving the fluidity and the chemical resistance by Component (B) can be sufficiently obtained while the effect of blending other components is sufficiently obtained.

Component (C) is in an amount of preferably 1 part by mass or more, more preferably 5 parts by mass or more, even more preferably 8 parts by mass or more, particularly preferably 10 parts by mass or more, and preferably 50 parts by mass or less, more preferably 48 parts by mass or less, even more preferably 45 parts by mass or less, with respect to 100 parts by mass of the total of Component (A) to Component (D). That is, the content of Component (C) is preferably within the range of 1 to 50 parts by mass with respect to 100 parts by mass of the total of Component (A) to Component (D). By incorporating the (hydrogenated) block copolymer of Component (C) within the above range, the effects of improving the flexibility, the good tactile properties, and the scratch resistance by Component (C) can be sufficiently obtained while the effect of blending other components is sufficiently obtained.

Component (D) is in an amount of preferably 15 parts by mass or more, more preferably 18 parts by mass or more, even more preferably 20 parts by mass or more, and preferably 50 parts by mass or less, more preferably 48 parts by mass or less, even more preferably 45 parts by mass or less, with respect to 100 parts by mass of the total of Component (A) to Component (D). That is, the content of Component (D) is preferably within the range of 15 to 50 parts by mass with respect to 100 parts by mass of the total of Component (A) to Component (D). By incorporating the hydrocarbon-based softening agent for rubber of Component (D) within the above range, the effects of improving the flexibility and the fluidity by Component (D) can be sufficiently obtained while the effect of blending other components is sufficiently obtained.

In the thermoplastic elastomer composition of the present embodiment, when the content of Component (B) is from 5 to 70 parts by mass and the content of Component (C) is from 1 to 50 parts by mass with respect to 100 parts by mass of the total of Component (A) to Component (D), the fluidity and the chemical resistance can be preferably enhanced while the effect of blending other components is sufficiently obtained.

In the thermoplastic elastomer composition of the present embodiment, Component (B)/Component (C) is preferably from 5 to 95/from 95 to 5 (mass ratio), more preferably from 10 to 90/from 90 to 10, even more preferably from 15 to 85/from 85 to 15, when the total of Component (B) and Component (C) is taken as 100 parts by mass.

When the content ratio of Component (B) and Component (C) is within the above range, both the flexibility and the chemical resistance can be achieved.

In the thermoplastic elastomer composition of the present embodiment, Component (C)/Component (D) is preferably from 20 to 80/from 80 to 20 (mass ratio), more preferably from 22 to 78/from 78 to 22, even more preferably from 25 to 75/from 75 to 25, when the total of Component (C) and Component (D) is taken as 100 parts by mass.

When the content ratio of Component (C) and Component (D) is within the above range, the flexibility of the thermoplastic elastomer composition of the present embodiment is enhanced, and thus the moldability thereof is improved.

When the thermoplastic elastomer composition of the present embodiment contains the crosslinking agent of Component (E), the content of Component (E) is preferably 0.01 parts by mass or more, more preferably 0.05 parts by mass or more, even more preferably 0.1 parts by mass or more, with respect to 100 parts by mass of the total of Component (A), Component (B), Component (C), and Component (D), in order to allow the crosslinking reaction to proceed sufficiently, while the content thereof is preferably 10 parts by mass or less, more preferably 8 parts by mass or less, even more preferably 5 parts by mass or less, from the viewpoint of controlling the crosslinking reaction. That is, the content of Component (E) is preferably within the range of 0.01 to 10 parts by mass with respect to 100 parts by mass of the total of Component (A) to Component (D).

When the thermoplastic elastomer composition of the present embodiment contains the crosslinking aid of Component (F), the content of Component (F) is preferably 0.05 parts by mass or more, more preferably 0.1 parts by mass or more, with respect to 100 parts by mass of the total of Component (A), Component (B), Component (C), and Component (D), from the viewpoint of yielding the effect of using the crosslinking aid, while the content thereof is preferably 3 parts by mass or less, more preferably 2 parts by mass or less, in terms of cost. That is, the content of Component (F) is preferably within the range of 0.05 to 3 parts by mass with respect to 100 parts by mass of the total of Component (A) to Component (D).

### Additional Component

The thermoplastic elastomer composition of the present embodiment may contain an additional component other than Component (A) to Component (F) (sometimes simply referred to as "additional component" in the present specification) as necessary within the range not impairing the objective of the present invention. Examples of the additional component include polymers and elastomers other than Components (A) to (C) (in the present specification, these may be collectively referred to as simply an "additional polymer") and various additives.

Examples of the additional polymer that may be contained in the thermoplastic elastomer composition of the present embodiment include polymers such as polyester, polyamide, styrene polymers (excluding the styrene polymer corresponding to Component (B) or Component (C)), acrylic polymers, polycarbonate, polyphenylene ether, and polyvinyl chloride, styrene-based elastomers other than Component (B) and Component (C); polyamide-based elastomers such as a polyamide-polyol copolymer; polyvinyl chloride-based elastomers and polybutadiene-based elastomers, and hydrogenated products thereof, products thereof with a polar functional group introduced by modification with, for example, an acid anhydride, and products thereof obtained by further graft-, random- and/or block-copolymerization with another monomer. One type of the additional polymers as described above may be used alone, or two or more thereof may be used in combination.

Examples of the additives that may be contained in the thermoplastic elastomer composition of the present embodiment include an antioxidant, a nucleating agent, a molding processing aid such as a lubricant, an ultraviolet absorber, a light stabilizer, a hydrolysis resistant agent, colorants such as pigments and dyes, an antistatic agent, a conductive agent, a reinforcing agent, a filler, a plasticizer, a mold release agent, and a foaming agent.

It is effective to blend silicone as a lubricant in the thermoplastic elastomer composition of the present embodiment. Silicone is a component that imparts wear resistance to the thermoplastic elastomer composition and prevents stickiness that is characteristic of elastomers.

The type of a substituent bonded to the siloxane main chain in the molecular structure of silicone is not particularly limited. However, dimethyl silicone (dimethylpolysiloxane), methylphenyl silicone, or alkyl-modified silicone is particularly suitably used.

Silicone usually has a kinematic viscosity (measured at 25°C in accordance with JIS Z 8803) of 1 centistoke (cSt) or more, preferably 5 centistokes or more, more preferably 10 centistokes or more, and the upper limit of the kinematic viscosity is not particularly limited. When silicone has a higher kinematic viscosity, the effects of improving wear resistance and the scratch resistance increase, and when silicone has a lower kinematic viscosity, the effect of improving the stickiness increases.

When the thermoplastic elastomer composition of the present invention contains a lubricant such as silicone oil, a content of the lubricant is preferably from 0.1 to 15 parts by mass, more preferably from 0.1 to 10 parts by mass, with respect to 100 parts by mass of the total of Component (A), Component (B), Component (C), and Component (D). The silicone content of 0.1 parts by mass or more is preferable from the viewpoint of the effects of improving wear resistance, scratch resistance, and sticking resistance. The silicone content of 15 parts by mass or less is preferable from the viewpoint of mechanical strength, and suppression of bleed-out.

As a lubricant, for example, a fatty acid amide and a fatty acid metal salt can be used in addition to the silicone oil described above.

It is preferable to contain the additional lubricant within the range of 0.01 to 10 parts by mass per 100 parts by mass of the total of Component (A) to Component (D). When the content thereof is 0.01 parts by mass or more, mold releasability and wear resistance can be improved. When the content thereof is 10 parts by mass or less, stickiness that is characteristic of lubricants can be suppressed. The content of the other lubricant is more preferably 5 parts by mass or less, even more preferably 3 parts by mass or less, per 100 parts by mass of the total of Component (A) to Component (D).

Examples of the antioxidant (heat stabilizer) which may be blended include a hydroxylamine-based antioxidant, a dithiocarbamate-based antioxidant, a hindered phenol-based antioxidant, a sulfur-based antioxidant, and a phosphorus-based antioxidant.

The hydroxylamine-based antioxidant is preferably N,N-dialkylhydroxylamine, examples of which include compounds represented by General Formula R^{a}R^{b}NOH (where R^{a} and R^{d} each independently represent an alkyl). In General Formula, R^{a} or R^{d} is preferably a dodecyl group, a tetradecyl group, a hexadecyl group, an octadecyl group, or a heptadecyl group. Particularly preferred dialkylhydroxylamines are N,N-dioctadecylhydroxylamine and N,N-dihexadecylhydroxylamine or mixtures thereof, and examples of commercially available products thereof include "IRGANOX (trade name) 1010" manufactured by BASF SE.

The dithiocarbamate-based antioxidant is preferably a metal salt of dialkyldithiocarbamic acid and particularly, nickel dialkyldithiocarbamate is preferable. In particular, nickel dibutyldithiocarbamate is preferable because of its significant effect of improving heat aging resistance.

As the hindered phenol-based antioxidant, any one of hindered phenol-based antioxidants known in the art may be used, and the hindered phenol-based antioxidant having a molecular weight of 500 or more, such as tetrakis[methylene-3(3,5-di-t-butyl-4-hydroxyphenyl)propionate]methane, is preferably used.

The sulfur-based antioxidant is a sulfur-containing compound, such as a thioether-based, dithioate-based, mercaptobenzimidazole-based, thiocarbanilide-based, or thiodipropionate-based compound. However, the compound corresponding to the above dithiocarbamate-based antioxidant is not included. In particular, the thiodipropionate-based compound is particularly preferable.

Examples of the phosphorus-based antioxidant include phosphorus-containing compounds, such as phosphoric acid, phosphorous acid, hypophosphorous acid derivatives, phenylphosphonic acid, polyphosphonate, dialkyl pentaerythritol diphosphite, and dialkyl bisphenol A diphosphite.

These antioxidants may be used alone, or two or more types thereof may be used in combination.

When the thermoplastic elastomer composition of the present embodiment contains an antioxidant, the content of the antioxidant is preferably from 0.01 to 5 parts by mass per 100 parts by mass of the total of Component (A) to Component (D). It is preferable that the content of the antioxidant be 0.01 parts by mass or more from the viewpoint of an effect of improving the heat aging resistance. Meanwhile, it is preferable that the content of the antioxidant be 5 parts by mass or less from the viewpoint of the reduced likelihood of problems such as bleeding, and the mechanical strength of the composition, for example. The content of the antioxidant is more preferably 2 parts by mass or less, even more preferably 1 part by mass or less, per 100 parts by mass of the total of Component (A) to Component (D).

### Method for Producing Thermoplastic Elastomer Composition

A method for producing the thermoplastic elastomer composition of the present embodiment is not particularly limited, and the thermoplastic elastomer composition can be produced by, for example, dry-blending Component (A) to Component (D), and Component (E), Component (F) or the additional component used as necessary, followed by melt-kneading, according to an ordinary method.

A mixing apparatus used at this time is not particularly limited, and examples thereof include kneading apparatuses such as a Banbury mixer, a Labo Plastomill, a single-screw extruder, and a twin-screw extruder. In particular, from the viewpoint of productivity and good kneading properties, it is preferable that a melt-mixing method using an extruder be employed for the production. A melting temperature during kneading may be appropriately set. The melting temperature is usually within the range of 130 to 300°C, preferably within the range of 150 to 250°C.

### Physical Properties of Thermoplastic Elastomer Composition

### Durometer Hardness A

The thermoplastic elastomer composition of the present embodiment preferably has a hardness (durometer hardness A) of 30 to 95 as measured using a type A durometer in accordance with JIS K 6253 (2006 edition). When the durometer hardness A is 30 or more, the mechanical strength and the heat resistance are easily controlled. When the durometer hardness A is 95 or less, the flexibility is easily exhibited.

The thermoplastic elastomer composition more preferably has a durometer hardness A of 35 or more, even more preferably 40 or more, and more preferably 92 or less, even more preferably 90 or less, particularly preferably 87 or less.

### Melt Flow Rate

The thermoplastic elastomer composition of the present embodiment preferably has a melt flow rate (MFR, measured at a temperature of 230°C with a load of 2.16 kgf) of 45 g/10 min or more and 200 g/10 min or less as measured in accordance with JIS K 7210-1. When the melt flow rate (MFR) is 45 g/10 min or more, the fluidity is excellent, and thus poor filling into a mold is suppressed and thin-wall molding is easily performed. When the melt flow rate (MFR) is 200 g/10 min or less, flash formation is easily controlled during molding, in addition to the fluidity.

The thermoplastic elastomer composition more preferably has a melt flow rate (MFR) of 50 g/10 min or more, even more preferably 55 g/10 min or more, and more preferably 190 g/10 min or less, even more preferably 170 g/10 min or less, particularly preferably 150 g/10 min or less.

As the thermoplastic elastomer composition of the present embodiment has a hardness of 35 or more and 87 or less as measured using a type A durometer in accordance with JIS K 6253 (2006 edition) and a melt flow rate of 45 g/10 min or more and 200 g/10 min or less as measured in accordance with JIS K 7210-1, the composition can have both flexibility and fluidity and is suitable for thin-wall molding. Also, the molded article can yield soft feel necessary for an automotive interior member.

### Automotive Interior Member

The thermoplastic elastomer composition of the present embodiment is suitable as an automotive interior member and is particularly suitable as an automotive interior skin among automotive interior members.

The automotive interior member and the automotive interior skin according to the embodiment of the present invention contain the thermoplastic elastomer composition of the present embodiment and are produced by, for example, molding the thermoplastic elastomer composition of the present embodiment. In molding the thermoplastic elastomer composition of the present embodiment, various molding methods such as a common injection molding method and an extrusion molding method can be used.

The molding conditions for injection molding of the thermoplastic elastomer composition of the present embodiment are as follows.

The molding temperature is preferably from 160 to 250°C, more preferably from 170 to 230°C. The injection pressure is preferably from 5 to 100 MPa, more preferably from 10 to 80 MPa. The mold temperature is preferably from 10 to 80°C, more preferably from 20 to 60°C.

An injection molded article obtained by injection molding the thermoplastic elastomer composition of the present embodiment can be thermally fused to an olefin-based hard resin such as a propylene resin and thus, the thermally fused molded article can be used as a composite molded article for an automotive interior member or automotive interior skin.

### Examples

Hereinafter, specific embodiments of the present invention will be described in more detail with reference to Examples, but the present invention is not limited to Examples as long as the gist of the present invention is not exceeded. The values for various production conditions and evaluation results in Examples have the meanings as preferable values of the upper limits or the lower limits in the embodiments of the present invention, and a preferable range may be a range defined by a combination of a value of the upper limit or lower limit described above and a value in Examples or values among Examples.

In Examples and Comparative Examples, the raw materials used for the preparation of the thermoplastic elastomer compositions and the evaluation methods of the obtained thermoplastic elastomer compositions are as follows.

### Raw Materials Used

### Component (A)

A-1: "NOVATEC (trade name) PP SA04M" manufactured by Japan Polypropylene Corporation (propylene homopolymer, MFR (JIS K 7210-1, 230°C, 2.16 kgf load): 40 g/10 min)
A-2: "ENGAGE (trade name) 8842" manufactured by Dow Inc. (ethylene/1-octene copolymer, MFR (JIS K 7210-1, 190°C, 2.16 kgf load): 1.0 g/10 min)

### Component (B)

B-1: "S.O.E. (trade name)-SS S1614" manufactured by Asahi Kasei Corporation (hydrogenated product of a copolymer composed of styrene and butadiene, the copolymer having a block containing a styrene unit and a butadiene unit, MFR (JIS K 7210-1, 190°C, 2.16 kgf load): 20 g/10 min)

### Component (C)

C-1: "KRATON (trade name) G1633EU" manufactured by Kraton Corporation (hydrogenated product of styrene-butadiene-styrene block copolymer, weight-average molecular weight: 443000, content rate of styrene units: 30 mass%)
C-2: "KRATON (trade name) G1652MU" manufactured by Kraton Corporation (hydrogenated product of styrene-butadiene-styrene block copolymer, weight-average molecular weight: 68500, content rate of styrene units: 29 mass%)

### Component (D)

D-1: "Diana Process Oil PW90" manufactured by Idemitsu Kosan Co., Ltd. (paraffin-based oil, kinematic viscosity (40°C): 90 cSt)

### Component (X): Alternative Component of Component (B) or Component (C)

X-1: "S.O.E. (trade name)-SS S1605" manufactured by Asahi Kasei Corporation (hydrogenated product of a copolymer composed of styrene and butadiene, the copolymer having a block containing a styrene unit and a butadiene unit, MFR (JIS K 7210-1, 190°C, 2.16 kgf load): 0.8 g/10 min)

### Component (E)

E-1: "Trigonox (trade name) 101-40C" manufactured by Kayaku Nouryon Corporation (mixture of 40 mass% of 2,5-dimethyl-2,5-di(t-butylperoxy)hexane and 60 mass% of calcium carbonate)

### Component (F)

F-1: "DVB-570" manufactured by Nippon Steel Chemical Co., Ltd. (mixture of 55 mass% of divinylbenzene and 45 mass% of ethylvinylbenzene)
F-2: "TAIC" (triallyl isocyanurate) manufactured by Shinryo Corporation

### Component (G)

G-1: "MB50-001" (dimethylpolysiloxane master batch, content rate of dimethylpolysiloxane: 50 mass%, kinematic viscosity (measured at 25°C in accordance with JIS Z 8803): 1000000 cSt or more) manufactured by Dow Corning Toray Co., Ltd.

### Evaluation Method

The evaluation methods of the thermoplastic elastomer compositions in Examples and Comparative Examples are as follows.

For the measurement (2) below, each of the thermoplastic elastomer compositions was injection-molded by an in-line screw type injection-molding machine ("IS130" manufactured by Toshiba Machine Co., Ltd.) under the conditions of an injection pressure of 50 MPa, a cylinder temperature of 220°C, and a mold temperature of 40°C to yield an injection sheet having a thickness of 2 mm, a width of 120 mm, and a length of 120 mm, the sheet having marking lines processed such that the distance between the marking lines was 100 mm in the actual dimensions of the mold in the flow direction of the composition, and the injection sheet was evaluated.

In the measurement (3) below, each of the thermoplastic elastomer compositions was injection-molded by an in-line screw type injection-molding machine ("SE180" manufactured by Sumitomo Heavy Industries, Ltd.) under the conditions of an injection pressure of 50 MPa, a cylinder temperature of 220°C, and a mold temperature of 40°C to yield an injection sheet having a thickness of 1.5 mm, a width of 100 mm, and a length of 350 mm, and the injection sheet was evaluated.

### (1) Melt Flow Rate (MFR)

The measurement was performed under the conditions of a temperature of 230°C and a load of 2.16 kgf in accordance with JIS K 7210-1.

### (2) Hardness using a Type A Durometer (Durometer Hardness A)

The hardness after 15 seconds was measured using a type A durometer in accordance with JIS K 6253 (Duro-A) (2006 edition).

### (3) Chemical Resistance

A sheet molded from polyvinylchloride (PVC, "Sunprene FE50MB" manufactured by Mitsubishi Chemical Group Corporation) was cut into pieces having a size of 35 mm by 35 mm and was left to stand on the injection sheet obtained by injection-molding each of the thermoplastic elastomer compositions to yield a test piece.

The test piece was left to stand in a thermostatic bath at 80°C for 20 hours, and then the degree of deformation of the injection sheet formed of the thermoplastic elastomer composition was visually checked and evaluated according to the following criteria. It was determined that the smaller the deformation, the better the chemical resistance. A higher evaluation score was regarded as better, and a score of 2 or more indicates that the sample is practically usable.

### Evaluation Criteria

5: No deformation (no movement when pressed with a finger).
4: No deformation by visual observation, but slight deformation when pressed with a finger.
3: Deformation is hardly observed in a top view of the test piece, but a part of the contact surface with the PVC sheet is deformed when viewed from the side.
2: Only the contact surface with the PVC sheet is deformed.
1: Not only the contact surface with the PVC sheet but also the periphery is deformed.
0: The sample is largely deformed, and even when pressed with a finger, the swollen portion does not reach the bottom.

### Example 1

With respect to 100 parts by mass of the total of 20 parts by mass of Component (A-1), 50 parts by mass of Component (B-1), 10 parts by mass of Component (C-1), and 20 parts by mass of Component (D-1), 1.5 parts by mass of Component (G-1) (the blending amount of dimethylpolysiloxane in Component (G-1) (actual blending amount: 50%)) and 0.1 parts by mass of an antioxidant ("SONGNOX (trade name) 1076" manufactured by Songwon Industrial Co., Ltd.) were mixed, and the obtained mixture was melt-kneaded (cylinder temperature of 180°C to 220°C) by a twin-screw kneader to produce pellets of a thermoplastic elastomer composition.

The obtained thermoplastic elastomer composition was evaluated for the items (1) to (3) above. The obtained evaluation results are shown in Table 1.

### Examples 2 to 11 and Comparative Examples 1 to 3

Pellets of thermoplastic elastomer compositions were obtained in the same manner as Example 1 except that the blending amounts of the raw materials were changed as shown in Table 1.

The obtained thermoplastic elastomer compositions were evaluated in the same manner as Example 1. The evaluation results are shown in Table 1.

### Table 1

**Table 1**

| | | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|---|---|---|
| Formulation | Component (A) | A-1 | Parts by mass | 20 | 22 | 22 | 18 | 22 | 22 | 22 | 22 | 22 | 22 | 22 | 22 | 22 | 25 |
| | | A-2 | Parts by mass | - | - | - | - | - | 15 | - | - | - | 15 | 15 | - | - | - |
| | Component (B) | B-1 | Parts by mass | 50 | 30 | 15 | 70 | 30 | 30 | 30 | 30 | 30 | 30 | 30 | - | - | - |
| | Component (C) | C-1 | Parts by mass | 10 | 16 | 16 | 4 | - | II | 16 | 16 | 16 | 11 | 11 | 16 | 16 | 25 |
| | | C-2 | Parts by mass | - | - | - | - | 16 | - | - | - | - | - | - | - | 30 | - |
| | Component (D) | D-1 | Parts by mass | 20 | 32 | 32 | 8 | 32 | 22 | 32 | 32 | 32 | 22 | 22 | 32 | 32 | 50 |
| | Component (E) | E-1 | Parts by mass | - | - | - | - | - | - | 0.32 | 0.32 | 0.32 | 0.32 | 0.32 | - | - | - |
| | Component (F) | F-1 | Parts by mass | - | - | - | - | - | - | 0.4 | - | 0.1 | - | 0.1 | - | - | - |
| | | F-2 | Parts by mass | - | - | - | - | - | - | - | 0.4 | 0.4 | 0.4 | 0.4 | - | - | - |
| | Component (X) | X-1 | Parts by mass | - | - | 15 | - | - | - | - | - | - | - | - | 30 | - | - |
| | Additional Components | G-1 | Parts by mass | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Antioxidant | Parts by mass | 0.1 | 0.1 | 0.1 | 0.1 | 0.1 | 0.1 | 0.1 | 0.1 | 0.1 | 0.1 | 0.1 | 0.1 | 0.1 | 0.1 |
| Evaluation results | Fluidity: MFR | | g/10 min | 100 | 141 | 69 | 93 | >200 | 60 | 143 | >200 | >200 | 68 | 54 | 40 | 23 | 75 |
| | Flexibility: Durometer hardness A | | - | 72 | 71 | 71 | 79 | 69 | 79 | 76 | 73 | 74 | 79 | 81 | 71 | 76 | 70 |
| | Chemical resistance: PVC mat test | | - | 2 | 3 | 3 | 3 | 2 | 2 | 3 | 3 | 3 | 4 | 3 | 3 | 1 | 1 |

As shown in Table 1, the compositions of Examples 1 to 11 had high fluidity and excellent chemical resistance, and the fluidity and the chemical resistance were both satisfactory. The molded article (sheet) had flexibility. In contrast, the composition of Comparative Example 1 had low fluidity. The composition of Comparative Example 2 had insufficient fluidity and chemical resistance. The composition of Comparative Example 3 had poor chemical resistance, and both fluidity and chemical resistance were not achieved.

Although the present invention has been described in detail and according to specific embodiments, it will be apparent to those skilled in the art that various changes and modifications can be made without departing from the spirit and scope of the present invention. The present application is based on Japanese Patent Application (JP 2024-014060) filed on February 1, 2024, the content of which is incorporated herein by reference.

### Industrial Applicability

The automotive interior member and the automotive interior skin obtained from the thermoplastic elastomer composition of the present invention are excellent in tactile properties, scratch resistance, light resistance, and heat resistance, are used for achievement of high-quality and comfort in an automotive interior space, and are further suitably used for elimination of painting from the viewpoint of environmental load and process reduction.

## Claims

1. A thermoplastic elastomer composition for an automotive interior member, the thermoplastic elastomer composition comprising Component (A), Component (B), Component (C) and Component (D):
Component (A): a polyolefin;
Component (B): a hydrogenated product of a block copolymer having a block containing an aromatic vinyl compound unit and a conjugated diene compound unit, the hydrogenated product having a melt flow rate of 5 g/10 min or more and 40 g/10 min or less as measured at 190°C with a load of 2.16 kgf in accordance with JIS K 7210-1 (2014 edition);
Component (C): a block copolymer having at least one block mainly composed of a conjugated diene compound unit and at least one block mainly composed of an aromatic vinyl compound unit, the block copolymer being other than Component (B), and/or a hydrogenated product thereof; and
Component (D): a hydrocarbon-based softening agent for rubber.

2. The thermoplastic elastomer composition for an automotive interior member according to claim 1, wherein Component (C) has a weight-average molecular weight of 100000 or more and 1000000 or less.

3. The thermoplastic elastomer composition for an automotive interior member according to claim 1, wherein a content of Component (B) is from 5 to 70 parts by mass with respect to 100 parts by mass of a total of Component (A), Component (B), Component (C), and Component (D).

4. The thermoplastic elastomer composition for an automotive interior member according to claim 1, wherein a content of Component (C) is from 1 to 50 parts by mass with respect to 100 parts by mass of a total of Component (A), Component (B), Component (C), and Component (D).

5. The thermoplastic elastomer composition for an automotive interior member according to claim 1, wherein a content of Component (A) is from 3 to 49 parts by mass with respect to 100 parts by mass of a total of Component (A), Component (B), Component (C), and Component (D).

6. The thermoplastic elastomer composition for an automotive interior member according to claim 1, wherein a content of Component (D) is from 15 to 50 parts by mass with respect to 100 parts by mass of a total of Component (A), Component (B), Component (C), and Component (D).

7. The thermoplastic elastomer composition for an automotive interior member according to claim 1, wherein a content of Component (B) is from 5 to 70 parts by mass and a content of Component (C) is from 1 to 50 parts by mass with respect to 100 parts by mass of a total of Component (A), Component (B), Component (C), and Component (D).

8. The thermoplastic elastomer composition for an automotive interior member according to claim 1, wherein Component (B)/Component (C) is from 5 to 95/from 95 to 5 (mass ratio), when a total of Component (B) and Component (C) is taken as 100 parts by mass.

9. The thermoplastic elastomer composition for an automotive interior member according to claim 1, wherein Component (C)/Component (D) is from 20 to 80/from 80 to 20 (mass ratio), when a total of Component (C) and Component (D) is taken as 100 parts by mass.

10. The thermoplastic elastomer composition for an automotive interior member according to claim 1, wherein Component (B) has a polymer block mainly composed of an aromatic vinyl compound unit without containing a conjugated diene compound unit, in addition to the block containing the aromatic vinyl compound unit and the conjugated diene compound unit.

11. The thermoplastic elastomer composition for an automotive interior member according to claim 1, the thermoplastic elastomer composition comprising polypropylene as Component (A).

12. The thermoplastic elastomer composition for an automotive interior member according to claim 11, the thermoplastic elastomer composition comprising an ethylene/α-olefin copolymer as Component (A).

13. The thermoplastic elastomer composition for an automotive interior member according to claim 1, the thermoplastic elastomer composition comprising Component (E), wherein a content of Component (E) is from 0.01 to 10 parts by mass with respect to 100 parts by mass of a total of Component (A), Component (B), Component (C), and Component (D):
Component (E): a crosslinking agent.

14. The thermoplastic elastomer composition for an automotive interior member according to claim 13, the thermoplastic elastomer composition comprising Component (F), wherein a content of Component (F) is from 0.05 to 3 parts by mass, with respect to 100 parts by mass of the total of Component (A), Component (B), Component (C), and Component (D):
Component (F): a crosslinking aid.

15. The thermoplastic elastomer composition for an automotive interior member according to claim 1, wherein the thermoplastic elastomer composition has a hardness of 30 or more and 95 or less as measured using a type A durometer in accordance with JIS K 6253 (2006 edition).

16. The thermoplastic elastomer composition for an automotive interior member according to claim 1, wherein the thermoplastic elastomer composition has a melt flow rate of 45 g/10 min or more and 200 g/10 min or less as measured in accordance with JIS K 7210-1.

17. The thermoplastic elastomer composition for an automotive interior member according to claim 1, wherein the thermoplastic elastomer composition has a hardness of 35 or more and 87 or less as measured by using a type A durometer in accordance with JIS K 6253 (2006 edition) and a melt flow rate of 45 g/10 min or more and 200 g/10 min or less as measured in accordance with JIS K 7210-1.

18. An automotive interior member comprising the thermoplastic elastomer composition for an automotive interior member described in any one of claims 1 to 17.

19. An automotive interior skin comprising the thermoplastic elastomer composition for an automotive interior member described in any one of claims 1 to 17.
